# EUROPEAN PATENT APPLICATION

(11) **EP 4 467 453 A1**
(43) Date of publication of application: **27.11.2024**
(21) Application number: 23175119.9
(22) Date of filing: 24.05.2023
(51) Int. Cl.: B64D 13/00, B64D 13/06, B01D 46/88, B01D 46/00, B01D 46/42, B01D 11/04

(54) **REPLACEABLE AIR FILTERS FOR AIRCRAFT DEVICES**

(71) Applicant: B/E Aerospace, Inc., Winston Salem, NC 27105 (US)
(72) Inventor: PANJER, Frederik Adrian Stephan, UT 3953BW Maarsbergen (NL)
(74) Representative: Dehns

(57) **Abstract**

An air filter assembly (100) for use in an aircraft galley insert, the assembly (100) comprising a cavity (110) for receiving an air filter cassette (130) in use, and a door (150) for providing or blocking access to said cavity (110), wherein said door (150) is hinged and comprises a front grill (155) configured for intaking air.

## Description

### FIELD

The examples disclosed herein relate to air filters that are used in devices upon an aircraft.

### BACKGROUND

A number of devices on an aircraft utilize air filters. When cleaning or replacing such air filter(s) in a device, such as an oven, heater, refrigerator etc, for an aircraft, it often takes the airline some time to perform this procedure. This cleaning or replacement process must be performed during GAIN maintenance, wherein the entire device containing the air filter must be removed from the aircraft. The device(s) containing the filter(s) often has to be removed from the aircraft, the front grill air intake and filter must then be removed by a technician, the air filter must be replaced and then all of the components need to be reassembled. This takes the airline quite some time and often the device, or devices, may have to be replaced with a second device if the turnaround time for the aircraft is not long enough. The air filter assemblies described herein therefore aim to provide a means by which the air filters can be more easily replaced and/or cleaned.

### SUMMARY

According to a first aspect, an air filter assembly for use in an aircraft galley insert is described. The assembly comprises a cavity for receiving an air filter cassette in use and has a door for providing or blocking access to said cavity. The door is hinged and comprises a front grill that is configured for intaking air.

In some examples, the assembly further comprises a door unlocking mechanism configured to unlock the door to the cavity.

In some examples, the assembly further comprises the air filter cassette.

In some examples, the door unlocking mechanism comprises said air filter cassette comprising a detachable portion that is configured to function as a tool to unlock the door to said cavity.

In some examples, the detachable tool is integrated into the mold shape of the assembly, with a disposable break-off support or a plurality of such supports.

In some examples, the assembly further comprises a tool guide slot which provides access to a tool receiving passage cavity in said air filter assembly and said tool receiving passage has an internal shape and size that corresponds to the external shape and size of the detachable tool.

In some examples, the door unlocking mechanism comprises said tool having a first unlocking feature and said door having a second unlocking feature, and wherein, said first unlocking feature is shaped and sized such that when it is inserted into the tool receiving passage it contacts and exerts a force on said second, door unlocking feature, said exertion of force resulting in an unlocking of said door.

In some examples, the door unlocking mechanism comprises a click finger mechanism.

In some examples, in use, the air filter cassette is held under compression when positioned in the cavity.

In some examples, aid air filter cassette has an outer perimeter and comprises a filter frame extending around the outer perimeter and a central section comprising a filter material.

In some examples, at least a section of the air filter cassette is manufactured from one or more of: paper, foam, carbon, aluminium, steel, fiberglass, plastic and/or combinations of the same.

In some examples, the door comprises a lip that, in use, sits inside the cavity, such that when the air filter cassette is inserted into the cavity the air filter cassette is held in place between the door and the lip.

In some examples, the assembly further comprises an interface display.

In some examples, the interface display displays information relating to one of more of equipment control and status, feedback of running programs, start-up sequences.

In some examples, the assembly further comprises an Air Flow Control System that is configured to monitor the air flow through said air filter assembly and alert a user when the air flow is below a predetermined threshold.

### BRIEF DESCRIPTION OF THE DRAWINGS

Figure 1 shows a front view of an example of a new type of air filter assembly as described herein, with the air filter positioned within the cavity.
Figure 2 shows a side view of the air filter assembly of figure 1, depicting the hinged door on the cavity for receiving the air filter.
Figure 3 shows a front view of an air filter as described herein.
Figure 4 shows a side view of the air filter as shown in figure 3.
Figure 5 shows a front view of the air filter assembly as shown in figure 3, further comprising a detachable portion that can be used as a tool to unlock the door.
Figure 6 shows a detached tool that is ready for insertion into the tool guide slot.
Figure 7 shows the detached tool exerting a force on the door unlocking feature.
Figure 8 shows the door unlocked and open.

### DETAILED DESCRIPTION

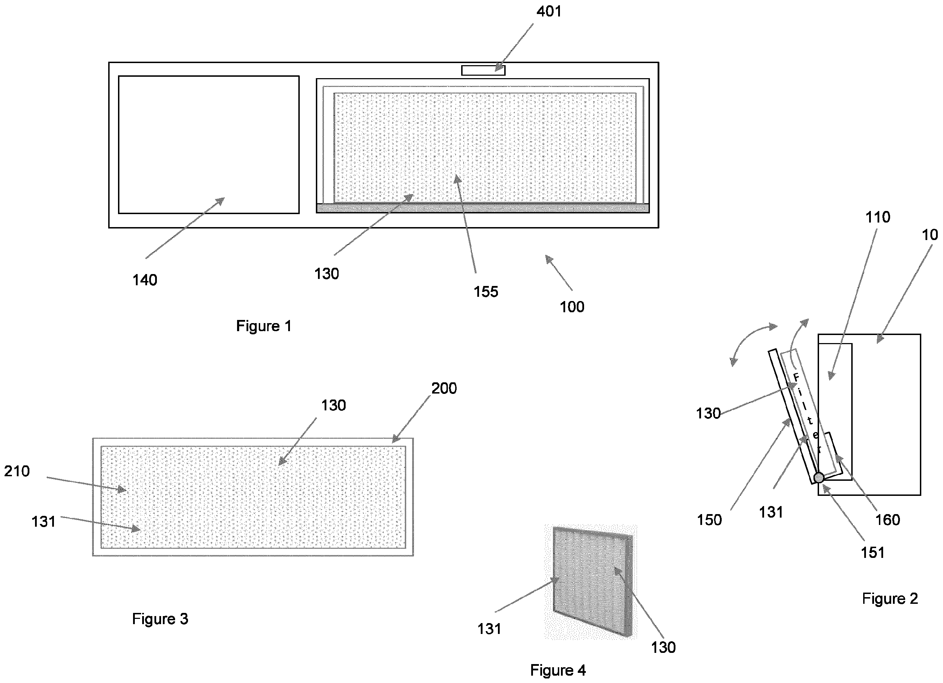

Figure 1 shows a new type of air filter assembly 100 that can be used in conjunction with a device 10 such as an oven, refrigerator, heater, cooler etc for use on an aircraft, i.e. electrical galley inserts. The air filter assembly 100 shown in figure 1 may comprise, in some examples, an interface display 140. The interface display may provide information to the user such as equipment control and status, feedback of running programs, start-up sequences etc.

The air filter assembly 100 comprises a cavity 110, as shown in figure 2, for receiving the air filter cassette 130 in use. As shown in figure 2, the cavity 110 may have a door 150 that is hinged at a door hinge point 151. The door hinge point, in some examples, may provide a hinge point 151 at one edge of the door, as shown in figure 2. The door 150 may comprise a front grill 155 configured for intaking air. The door 150 may comprise a lip 160 that in use sits inside the cavity 110, such that when the air filter cassette 130 is inserted into the cavity 110, the air filter cassette 130 is held in place between the front grill 155 of the door 150 and the lip 160. This is depicted in figure 2. Thus, the air filter cassette 130 may be inserted into the cavity of the air filter assembly 100 in a manner similar to how a cassette tape would be inserted into a cassette deck.

An example of the air filter cassette 130 is depicted in figure 3. The air filter cassette 130 may comprise a first face 131 that is facing the air intake grill 155 in use. This face 131 of the air filter cassette 130 may comprise a filter frame 200 extending around the outer perimeter of the air filter 130 with a central section 210 comprising a suitable filter material. Examples of filter materials may comprise one of the: paper, foam, carbon, aluminium, steel, fiberglass, plastic and/or combinations of the same. Other materials may also be used and this list is not exhaustive.

In some examples, the front grill 155 may be manufactured via injection moulding such that the front grill 155 forms the hinged door 150 of the air filter assembly 100 and is formed in one piece. Other manufacturing methods may alternatively be used.

For such heating/cooling/galley insert devices that are used in an aircraft, due to security reasons, the air filter should be held in position in such a way that an unauthorised person cannot access the filter. Usually, only specialised technicians, with specialised tools are able to access the air filters of such devices on an aircraft. These security issues must therefore be considered for the air filters and air filter assemblies as described herein.

The cavity 110 for receiving the air filter cassette 130 as shown in the figures may therefore comprise an unlocking mechanism that can only be accessed by an authorised person and/or with a specific tool.

One example of such an unlocking mechanism may comprise the air filter cassette 130 comprising a portion that can be detached from a new cassette 130 and used as a key to open the cavity 110 of the air filter assembly 100. If the technician boards the aircraft with a new air filter cassette 130, the detachable portion of the air filter cassette 130 can then be used to access the cavity 110. In other words, an unauthorised person would only be able to access the air filter cavity 110 if they have a new air filter cassette 130.

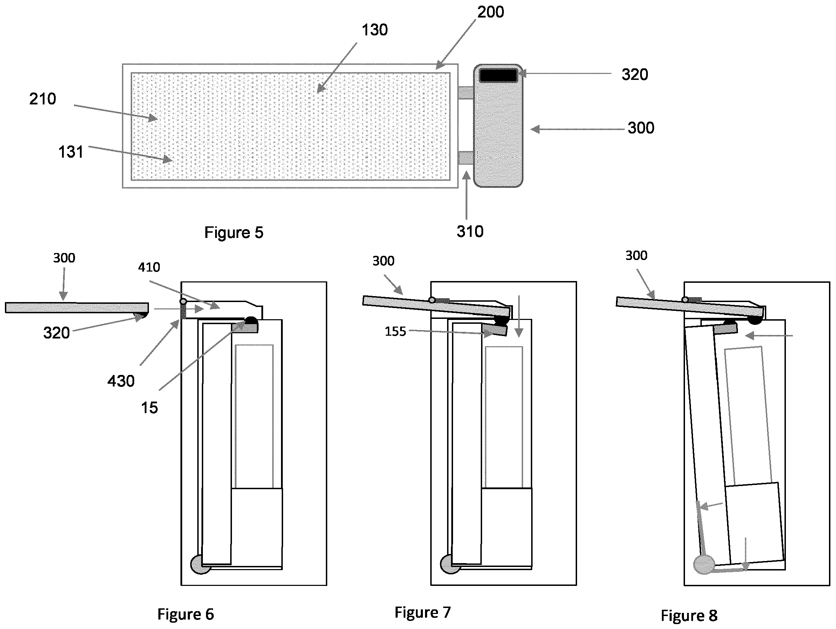

An example of a tool 300 for accessing the air filter is shown in figures 5 to 8. As shown in figure 5, in this example, the tool 300 can be provided as a tool that is integrated into the mold shape of the assembly, with a disposable break-off support 310 or a plurality of such supports 310. This may be manufactured via injection molding, or alternative suitable manufacturing methods.

In an example wherein multi filter replacement packages are required, (e.g. for servicing multiple galley inserts onboard the aircraft) the tool could be integrated in similar manner into the packaging.

The air filter assembly may have a tool guide slot 401 which provides access to a tool receiving passage cavity 410 provided therein, wherein the tool receiving passage 410 has an internal shape and size that corresponds to the external shape and size of the tool 300. The assembly may have a tool guide cover 430 that closes the tool guide slot 401, and thereby the entrance to the tool receiving passage 410 when not in use. In some examples, a coil spring could be used to operate the cover. Other means could also be used to close off the tool guide slot 401, so as to prevent dust accumulation and improve the aesthetics of the assembly.

When replacing the air cassette filter 310, the maintenance person breaks the detachable tool 300 off/away from the assembly, or its packaging, is shown in figure 6. The tool 300 can then be inserted through the tool guide slot 401 and into the tool receiving cavity 410. This is shown in figure 7. The tool is therefore relatively small, lightweight and can be made from recycled and/or biodegradable material, as well as other types of material.

The unlocking mechanism may comprise the tool 300 and a corresponding door unlock in feature 155. The tool 300 may have a first unlocking feature, such as a protrusion 320, or other guiding means, and the tool 300 may be shaped and sized such that once it is inserted into the tool receiving passage 410, the unlocking feature 320 contacts a corresponding door unlocking feature 155 that is provided on the door 150. The door unlocking feature 155 may comprises an inwardly facing protrusion that is made from a flexible material. When locked, the inwardly facing protrusion 155 exerts a force such that it holds the door in place and locked. Once the tool 300 is inserted, however, as shown in figure 7, the tool unlocking feature 320 exerts a counter force on the door unlocking feature 155 such that the door unlocks as shown in figure 8.

The air filter assembly 100 may alternatively have an unlocking mechanism that comprises a click finger design as the locking mechanism, wherein a specialised tool is required for the opening of the door 150.

In some examples, the air filter cassette 130 may be held under compression when provided in the cavity 110 so as to prevent vibrations and/or noise.

The air filter cassette 130 may also, or alternatively, integrated with the front air intake grill 155 of the door 150. In this example, the service time would be further reduced.

The replaceable air filter cassette 130 may be a consumable item such that it could be made from 100% biodegradable material or a recycled/recyclable material.

In some examples, batches of air filter cassettes 130 could be sold with equipment for on wing periodic replacement. Different shaped and sized air filter cassettes 130 can be provided for different galley inserts. They can also comprise different grain sizes and dimensions for various inserts with renowned filter fabricators such as HEPA. In some examples, these air filter assemblies 100 can comprise an additional or incorporated bacteria/virus filter.

In some examples, an 'Air Flow Control System' may be provided in combination with the air filter cassette 130, wherein the air low control system alerts the user to the fact that the filter is becoming less efficient. This can be achieved by the air flow control system monitoring different cooling speed settings and may be pre-programmed for application of specific filter cassette types.

The examples described herein therefore provide air filter assemblies wherein the air filters can be replaced more easily, and potentially without the need for specialised tools. The air filter assemblies described herein are, however, still able to meet he required security standards of an aircraft insert.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An air filter assembly (100) for use in an aircraft galley insert,
the assembly (100) comprising a cavity (110) for receiving an air filter cassette (130) in use,
and a door (150) for providing or blocking access to said cavity (110);
wherein said door (150) is hinged and comprises a front grill (155) configured for intaking air.

2. The assembly of claim 1, further comprising a door unlocking mechanism configured to unlock the door (150) to the cavity (110).

3. The air filter assembly (100) of claim 1 or 2, further comprising said air filter cassette (130).

4. The air filter assembly of claim 3, wherein said door unlocking mechanism comprises said air filter cassette (130) comprising a detachable tool (300) that is configured to unlock the door (150) to said cavity (110).

5. The air filter assembly of claim 4, wherein said detachable tool (300) is integrated into the mold shape of the assembly, with a disposable break-off support (310) or a plurality of such supports (310).

6. The air filter assembly of claim 5, further comprising a tool guide slot (401) which provides access to a tool receiving passage cavity (410) in said air filter assembly and said tool receiving passage (410) has an internal shape and size that corresponds to the external shape and size of the detachable tool (300).

7. The air filter assembly of claim 6, wherein said tool (300) has a first unlocking feature (320) and wherein said door unlocking mechanism further comprises a second unlocking feature (155) and wherein said first unlocking feature (320) is shaped and sized such that when it is inserted into the tool receiving passage (410) it contacts and exerts a force on said second, door unlocking feature (155), said exertion of force resulting in an unlocking of said door (155).

8. The air filter assembly of any of claims 1 to 3, wherein said second, door unlocking mechanism comprises a click finger mechanism.

9. The air filter assembly of any preceding claim, wherein, in use, the air filter cassette (130) is held under compression when positioned in the cavity (110).

10. The air filter assembly of any of claims 3 to 9, wherein said air filter cassette (130) has an outer perimeter and comprises a filter frame (200) extending around the outer perimeter and a central section (210) comprising a filter material.

11. The air filter assembly of any of claims 3 to 10, wherein at least a section of the air filter cassette (130) is manufactured from one or more of: paper, foam, carbon, aluminium, steel, fiberglass, plastic and/or combinations of the same.

12. The air filter assembly of any preceding claim, wherein said door (150) comprises a lip (160) that, in use, sits inside the cavity (110), such that when the air filter cassette (130) is inserted into the cavity 110, the air filter cassette (130) is held in place between the door (150) and the lip (160).

13. The air filter assembly of any preceding claim, further comprising an interface display (140).

14. The air filter assembly of claim 13, wherein said interface display (140) displays information relating to one of more of equipment control and status, feedback of running programs, start-up sequences.

15. The assembly of any preceding claim further comprising an Air Flow Control System that is configured to monitor the air flow through said air filter assembly and alert a user when the air flow is below a predetermined threshold.
